Europäisches Patentamt

(19) European Patent Office

Office européen des brevets

(11) Publication number: **0 310 278 B1**

(12) **EUROPEAN PATENT SPECIFICATION**

(45) Date of publication of patent specification :
14.08.91 Bulletin 91/33

(51) Int. Cl.⁵ : **F16B 4/00**

(21) Application number : **88308651.4**

(22) Date of filing : **19.09.88**

(54) Inserts.

(30) Priority : **22.09.87 GB 8722275**

(43) Date of publication of application :
**05.04.89 Bulletin 89/14**

(45) Publication of the grant of the patent :
**14.08.91 Bulletin 91/33**

(84) Designated Contracting States :
**AT BE CH DE ES FR GR IT LI LU NL SE**

(56) References cited :
**DE-A- 2 628 832**
**FR-A- 2 445 907**
**GB-A- 1 279 452**
**GB-A- 1 314 061**
**GB-A- 1 419 855**

(73) Proprietor : **Tappex Thread Inserts Limited**
**Masons Road**
**Stratford-upon-Avon, Warwickshire CV37 9NT**
**(GB)**

(72) Inventor : **Barnsdale, Timothy John**
**c/o Tappex Thread Inserts Limited Masons**
**Road**
**Stratford-upon-Avon Warwickshire CV379NT**
**(GB)**

(74) Representative : **Hallam, Arnold Vincent et al**
**E.N. Lewis & Taylor 5 The Quadrant**
**Coventry CV1 2EL Warwickshire (GB)**

## Description

This invention relates to inserts which are installed in parent material by a push-in or similar operation according to the preamble of claim 1 are of general knowledge.

As well as providing an insert of simple and inexpensive form capable of rapid installation, the object of the invention is to provide such an insert as an axial spacing device for use in components of plastics or similar parent material whereby the material is wholly or largely relieved of compression by bolts, screws or like fixing devices when the component is fitted in position of use. Thus the tendency of the plastics material to creep under a compressive load and so cause relaxation or loosening of the fixing is avoided.

Inserts having an exterior annular groove or grooves thereabout are disclosed in British patent specification number 1279452 and in French patent specification published under number 2455907 in which the inserts are intended for installation by high frequency vibration or direct heating in order to melt plastic parent material in a hole therein receiving the insert for subsequent solidification in retentive engagement about spiral toothed formation of the insert and in the groove or grooves after full installation. In German patent specification DE 2628832 a solid insert is provided with exterior ribs of buttress form to resist pull out of the insert when installed in a hole in parent material.

According to the invention an insert for axial spacing purposes in a hole therefor in plastics or similar parent material in order to substantially relieve said material of compression by a securing bolt or the like when received through the insert, is characterised by the insert being of annular form having a coaxial plain bore therethrough for receiving a said securing bolt or the like through it, said insert having one or both of its exterior end portions chamfered to provide a lead for facilitating entry of the insert into a said hole on push in or like axial installation therein, the insert further having thereabout at least one full diameter outer peripheral land of narrow width in relation to the axial length of the insert and situated between the or each chamfered end portion and an immediately adjacent annular groove in and about the outer periphery of the insert, said land being adapted on installation to have an interference fit in a said hole whereby adjacent parent material is temporarily radially deformed over said land prior to resiling into the groove for accommodation therein, which groove has opposed sharp edged shoulders of which that shoulder which faces in the same direction of installation of the insert is adapted to shear parent material from the wall of a said hole during installation whilst both shoulders are adapted to have a digging in action into the wall of a said hole to resist axial movement of the insert in either direction after full installation of the latter within a said hole.

Whereas such an insert is usually installed by simple push in or press in operation into parent material, it may be installed by movement of the parent material or component relative to it or by combined relative axial movement of the insert and material.

Typical practical forms of the insert are shown in the accompanying drawings in which :

Figure 1 is a side elevation on an enlarged scale and partially in axial plane section of one form of the insert ;

Figure 2 is an end view ;

Figures 3 and 3A show the procedure of installation and use of the insert in parent material ;

Figure 4 is a side elevation of a developed form of the insert on an enlarged scale ; and

Figure 5 is a side elevation of a further form of the insert shown installed in position of use.

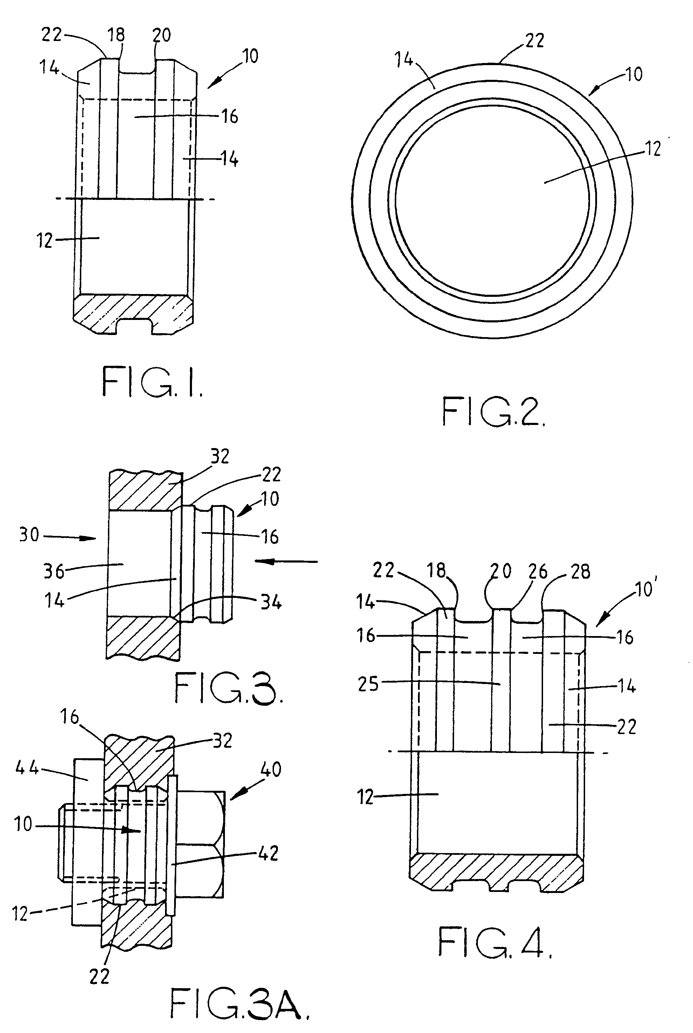

Referring to Figures 1 to 3A an insert in the form of an anti-creep spacer is shown and consists of a sleeve or bush 10 having a co-axial bore 12, each end of the insert being chamfered to provide lead in end portions 14 in a double ended manner to facilitate ease of location and entry of the insert 10 in a hole 30 therefor in parent plastics material 32 of a component or the like.

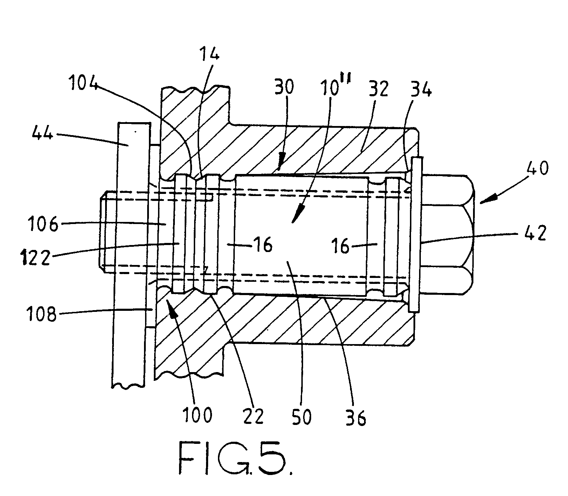

The insert has an annular groove 16 formed in its outer peripheral surface which provides a respective shoulder 18, 20 at each axial end of the groove. The shoulders are relatively sharp, the shoulder 18 serving to inhibit or resist movement of the insert to the right, as seen in Figures 1 and 3A in the hole 30 whilst the shoulder 20 serves to inhibit movement in the opposite direction.

Figure 3 shows the insert of Figure 1 being inserted in the hole 30, the hole having a lead in taper portion 34 which freely receives a leading chamfered end 14 of the insert 10, the portion 34 leading into a narrower bore 36 of the hole 30.

As the insert 10 is pressed into the narrower bore 36, the chamfer 14 contacts the lead in taper portion 34 and with an interference action forces the plastics material apart in the bore 36 and over the adjacent land 22 of the insert. Continued axial movement of the insert results in the plastics material resiling to its original position, and in doing so occupying the annular groove 16 (Figure 3A). At virtually the same time the rear shoulder 20 shears material from the wall of the bore 36, restricting further forward axial movement of the insert. Such shearing action preferably takes place during the last half or thereabouts of the full axial movement of the insert 10 into the bore 36. After such installation the opposing shoulder 18 inhibits reverse movement of the insert in the bore 36 of the hole 30 by a digging in action.

The component of plastics material 32 can then be secured in position of use by a bolt 40 (Figure 3A) passing with some clearance through the central bore 12 in the insert 10. Full tightening of the bolt 40 results in the flanged bolt head 42 contacting one annular end face of the insert with the other annular end face abutting a metal bracket or other support 44 to which the plastics component is to be secured. The bolt 40 is therefore tightened directly against the insert 10 and it is direct friction between the bolt 40, the insert 10 and the bracket 44 which secures the assembly and which is thus not affected by any creep of the plastics material 32. In the example shown the plastics material 32 is subject to some localised compression to the extent of the taper lead in 34 in order to provide a vibration proof mounting but if desired the arrangement may be such that the plastics material 32 is subject to no compression at all. Such compression is preferably less than the elastic condition of the plastics material 32 and is normally in the region of 2%.

The groove 16 in the insert 10 is spaced a relatively short distance from the adjacent leading end of the insert so that during insertion the plastics material 32 is deformed for a relatively short period of time. This prevents or minimises permanent deformation of the plastics material 32 which might occur if it were expanded for a relatively long period of time.

The above described action of the insert 10 ensures its retention in the hole 30 prior to fitting of the plastics material component, even where the hole 30 has a very short axial length requiring a short insert 10 e.g. of the order of 5 mm in axial length.

If desired each land 22 may be serrated or knurled to facilitate temporary deformation of the plastics material 32 over the leading land 22 on installation of the insert in the hole 30, particularly where the plastics material is of a brittle nature. The serration or knurling may be straight (i.e. axially parallel) or of spiral or inclined form relative to the axis of the insert.

Figure 4 shows a developed form of the insert $10^1$ provided with two annular grooves 16 which provide additional retaining shoulders 26, 28 and a central land 25.

Each groove 16 is preferably radiused at each axial end for half its depth or thereabouts. That is to say the corner joining each end wall of the groove 16 to the base of the groove. This has the effect of minimising axial width of the groove and thus reinforces it to provide high resistance to compressive forces and also avoid shear points.

In practice the inserts 10 are usually produced in steel and are preferably zinc plated and may also be hardened to withstand high torque tightening of the bolt 40.

Referring to Figure 5 an elongate double grooved form of the insert $10^{11}$ is shown in which the grooves 16 are spaced apart by a central plain diameter axial portion 50 and is also shown used in combination with a further insert 100. This latter insert is provided with a chamfered leading end 104 and an annular groove 106 adjacent a land 122 so that it can be inserted into the other end of the hole 30 with an interference action and so be self retaining in the hole. In particular the insert 100 has a rear flange 108 which on one side abuts the plastic material 32 and on the other side abuts the mounting bracket 44 or the like.

On full tightening of the bolt 40, the flanged bolt head 42 abuts the adjacent end of the insert $10^{11}$ which in turn abuts the insert 100 bringing the flange 108 into firm abutment with the bracket 44. This arrangement has particular application where the insert $10^{11}$ has a thin wall due to space restriction and therefore has to be made of hardened steel to withstand a high clamp loading and where the leading end of the insert would otherwise tend to sink into the face of a mild steel bracket 44 and so cause relaxation of the mounting. However the provision of the insert 100 with its flange 108 in a hardened form provides a relatively large surface area for abutment with the bracket 44 and protects the latter from direct contact with the leading end of the insert $10^{11}$. In the case of a moulded or cored hole i.e., having some taper form the parent material 32 would not normally resile into the rear groove 16 (see Figure 5).

Whereas the self retaining action of the insert 100 is preferred to facilitate assembly of the inserts in holes therefor in plastic components or mouldings a plain form of hardened washer may be employed in place of the insert 100 and to act in the same manner as the flange 108 of the latter.

It will be appreciated that in every case the insert is installed in a plastic component or moulding after manufacture of the latter. Thus the inserts can be pressed into moulded or cored holes in the components e.g. immediately after the components are removed from a moulding machine, an while the plastics material is still warm and pliable.

## Claims

1. An insert for axial spacing purposes in a hole (30) therefor in plastics or similar parent material (32) in order to substantially relieve said material (32) of compression by a securing bolt or the like (40) when received through the insert (10, $10^1$, $10^{11}$), characterised by the insert (10, $10^1$, $10^{11}$) being of annular form having a co-axial plain bore (12) therethrough for receiving a said securing bolt or the like (40) through it, said insert (10, $10^1$, $10^{11}$) having one or both of its exterior end portions chamfered (14) to provide a lead for facilitating entry of the insert (10, $10^1$, $10^{11}$) into a said hole (30) on push in or like axial installation therein, the insert (10, $10^1$, $10^{11}$) further having thereabout at least one full diameter outer peripheral land (22) of narrow width in relation to the axial length of the insert (10, $10^1$, $10^{11}$) and situated between the or each chamfered end portion (14) and an immediately adjacent annular groove (16) in and about the outer periphery of the insert (10, 10$^1$, 10$^{11}$), said land (22) being adapted on installation to have an interference fit in a said hole (30) whereby adjacent parent material (32) is temporarily radially deformed over said land (22) prior to resiling into the groove (16) for accommodation therein, which groove (16) has opposed sharp edged shoulders (18, 20 or 26, 28) of which that shoulder which faces in the same direction of installation of the insert (10, 10$^1$, 10$^{11}$) is adapted to shear parent material (32) from the wall of a said hole (30) during installation whilst both shoulders (18, 20 or 26, 28) are adapted to have a digging in action into the wall of a said hole (30) to resist axial movement of the insert (10, 10$^1$, 10$^{11}$) in either direction after full installation of the latter within a said hole (30).

2. An insert according to claim 1 wherein two annular grooves (16) are provided in and about the outer periphery of the insert (10, 10$^1$, 10$^{11}$) each immediately adjacent a corresponding land (22), the grooves (16) being spaced apart by a full diameter outer peripheral narrow land (25) or by a full diameter outer peripheral central portion (50) of the insert (10, 10$^1$, 10$^{11}$).

3. An insert according to claim 1 or 2 wherein the outer peripheral surface of the or each land (22) is knurled or serrated to facilitate temporary radial deformation of the parent material (32) thereover.

4. An insert according to any of the preceding claims wherein the or each groove (16) is radiussed between the base thereof and its shoulders (18, 20 or 26, 28) in order to provide reinforcement against axial compressive forces and to avoid shear points at the base of the groove (16).


**Patentansprüche**

1. Einsatz zum Zweck axialer Beabstandung in einem Kunststoff- oder ähnlichen Ausgangsmaterial (32) dafür vorgesehenen Loch (30), um das Material von durch einen Sicherungsbolzen oder dergleichen (40) bei dessen Aufnahme durch den Einsatz (10, 10$^1$, 10$^{11}$) verursachten Druck wesentlich zu entlasten, dadurch gekennzeichnet, daß der Einsatz (10, 10$^1$, 10$^{11}$) eine ringförmige Gestalt mit einer durch ihn verlaufenden, koaxialen glatten Bohrung (12) zum Aufnehmen eines Sicherungsbolzens oder dergleichen (40) durch diese aufweist, wobei einer bzw. beide der Außenendabschnitte des Einsatzes (10, 10$^1$, 10$^{11}$) abgeschrägt (14) sind, um eine Führung zur Erleichterung des Eingangs des Einsatzes (10, 10$^1$, 10$^{11}$) in ein Loch (30) bei einem hineinschiebenden oder ähnlichen axialen Einbau darin bereitzustellen, wobei der Einsatz (10, 10$^1$, 10$^{11}$) ferner um sich mindestens einen sich zwischen dem bzw. jedem abgeschrägten Endabschnitt (14) befindlichen Außenumfangssteg (22) mit Volldurchmesser von im Vergleich zur axialen Länge des Einsatzes (10, 10$^1$, 10$^{11}$) geringer Breite aufweist, sowie eine unmittelbar benachbarte ringförmige Nut (16) im und um den Außenumfang des Einsatzes (10, 10$^1$, 10$^{11}$), wobei der Steg (22) beim Einbau so angepaßt wird, daß er in einem Loch (30) einen Preßsitz aufweisen kann, wodurch benachbartes Ausgangsmaterial (32) zeitweise radial über dem Steg (22) verformt wird, bevor es zur Unterbringung in der Nut (16) in diese zurückschnellt, wobei die Nut (16) einander gegenüberliegende, scharfkantige Schultern (18, 20 bzw. 26, 28) aufweist, wovon die der gleichen Einbaurichtung wie der Einsatz (10, 10$^1$, 10$^{11}$) zugewandte Schulter so ausgebildet ist, daß sie während dem Einbau Ausgangsmaterial (32) von der Wand eines Lochs (30) abscheren kann, während beide Schultern (18, 20 bzw. 26, 28) so ausgebildet sind, daß sie sich in die Wand eines Loches (30) eingraben können, um axialer Bewegung des Einsatzes (10, 10$^1$, 10$^{11}$) in die eine oder andere der beiden Richtungen nach dem vollständigen Einbau desselben in einem Loch (30) zu widerstehen.

2. Einsatz nach Anspruch 1, wobei zwei ringförmige Nuten (16) im und um den Außenumfang des Einsatzes (10, 10$^1$, 10$^{11}$) vorgesehen sind, wobei jede einem entsprechenden Steg (22) unmittelbar benachbart ist, wobei die Nuten (16) um einen schmalen Außenumfangssteg (25) mit Volldurchmesser oder um einen Außenumfangsmittelabschnitt (50) mit Volldurchmesser des Einsatzes (10, 10$^1$, 10$^{11}$) voneinander beabstandet sind.

3. Einsatz nach Anspruch 1 oder 2, wobei die Außenumfangsfläche des bzw. jeden Stegs (22) zur Erleichterung zeitweiser radialer Verformung des Ausgangsmaterials (32) darüber gerändelt oder gezahnt ist.

4. Einsatz nach einem der vorangehenden Ansprüche, wobei die bzw. jede Nut (16) zwischen ihrem Boden und ihren Schultern (18, 20 bzw. 26, 28) gerundet ist, um Verstärkung gegen axiale Druckkräfte zu bieten und Scherstellen am Boden der Nut (16) zu vermeiden.


**Revendications**

1. Pièce d'insertion à des fins d'espacement axial dans un trou (30) à cet effet dans une matière mère (32) en plastique ou similaire afin de sensiblement soulager ladite matière (32) de la compression par un boulon de fixation ou similaire (40) lorsqu'il est reçu à travers la pièce d'insertion (10, 10$^1$, 10$^{11}$), caractérisée en ce que la pièce d'insertion (10, 10$^1$, 10$^{11}$) est de forme annulaire ayant à travers celle-ci un alésage (12) simple co-axial pour recevoir un dit boulon de fixation ou similaire (40) à travers celui-là, ladite pièce d'insertion (10, 10$^1$, 10$^{11}$) présentant à l'une ou ses deux parties d'extrémité extérieures un biseau (14) pour fournir une amenée pour faciliter l'entrée de la pièce d'insertion (10, 10¹, 10¹¹) dans un dit trou (30) lors de la poussée ou d'une installation axiale similaire dans celui-là, la pièce d'insertion (10, 10¹, 10¹¹) ayant en outre autour de celle-là au moins une nervure (22) périphérique extérieure de diamètre complet, de largeur étroite par rapport à la longueur axiale de la pièce d'insertion (10, 10¹, 10¹¹) et située entre la ou chaque partie d'extrémité biseautée (14) et une rainure (16) annulaire immédiatement adjacente située dans et autour de la périphérie extérieure de la pièce d'insertion (10, 10¹, 10¹¹), ladite nervure (22) étant adaptée lors de l'installation pour avoir un ajustement serré dans ledit trou (30) grâce à quoi la matière mère adjacente (32) est temporairement déformée radialement sur ladite nervure (22) avant de se débander dans la rainure (16) pour s'y installer, laquelle rainure (16) présente des épaulements (18, 20, ou 26, 28) opposés à bords aigus dont l'épaulement qui fait face dans la même direction d'installation que la pièce d'insertion (10, 10¹, 10¹¹) est adapté pour cisailler de la matière mère (32) de la paroi d'un dit trou (30) pendant l'installation alors que les deux épaulements (18, 20 ou 26, 28) sont adaptés pour effectuer une action de creusage dans la paroi d'un dit trou (30) pour résister au mouvement axial de la pièce d'insertion (10, 10¹, 10¹¹) dans l'une ou l'autre direction après l'installation complète de cette dernière dans un dit trou (30).

2. Pièce d'insertion selon la revendication 1, dans laquelle deux rainures annulaires (16) sont prévues dans et autour de la périphérie extérieure de la pièce d'insertion (10, 10¹, 10¹¹), chacune immédiatement adjacente à une nervure correspondante (22), les rainures (16) étant espacées les unes des autres par une nervure (25) étroite périphérique extérieure de diamètre complet ou par une partie (50) centrale périphérique extérieure de diamètre complet de la pièce d'insertion (10, 10¹, 10¹¹).

3. Pièce d'insertion selon la revendication 1 ou 2, dans laquelle la surface périphérique extérieure de la ou de chaque nervure (22) est moletée ou striée pour faciliter la déformation radiale temporaire de la matière mère (32) sur celle-là.

4. Pièce d'insertion selon l'une quelconque des revendications précédentes, dans laquelle la ou chaque rainure (16) est arrondie entre la base de celle-ci et ses épaulements (18, 20 ou 26, 28) afin de prévoir un renforcement contre les forces de compression axiales et d'éviter les points de cisaillement à la base de la rainure (16).

FIG.I.

FIG.2.

FIG.3.

FIG.3A.

FIG.4.

FIG.5.